Europäisches Patentamt

European Patent Office

Office européen des brevets

(19)

(11) Veröffentlichungsnummer : **0 441 173 B1**

(12)  **EUROPÄISCHE PATENTSCHRIFT**

(45) Veröffentlichungstag der Patentschrift :
08.09.93 Patentblatt 93/36

(51) Int. Cl.$^5$ : **B01J 37/02,** B01J 23/56,
B01J 23/89

(21) Anmeldenummer : 91100789.6

(22) Anmeldetag : 23.01.91

(54) Katalysator für die Reinigung der Abgase von Brennkraftmaschinen.

Die Akte enthält technische Angaben, die nach
dem Eingang der Anmeldung eingereicht
wurden und die nicht in dieser Patentschrift
enthalten sind.

(30) Priorität : 09.02.90 DE 4003939

(43) Veröffentlichungstag der Anmeldung :
14.08.91 Patentblatt 91/33

(45) Bekanntmachung des Hinweises auf die
Patenterteilung :
08.09.93 Patentblatt 93/36

(84) Benannte Vertragsstaaten :
AT BE CH DE ES FR GB GR IT LI NL SE

(56) Entgegenhaltungen :
EP-A- 0 100 267
EP-A- 0 326 845
FR-A- 2 430 795

(73) Patentinhaber : DEGUSSA AG
Weissfrauenstrasse 9
D-60311 Frankfurt (DE)

(72) Erfinder : Domesle, Rainer, Dr.
Rannenbergring 56
W-8755 Alzenau-Kälberau (DE)
Erfinder : Engler, Bernd, Dr.
Treuner Strasse 2
W-6450 Hanau 9 (DE)
Erfinder : Schmidt, Felix, Dr.
Fécampring 11
W-7888 Rheinfelden (DE)
Erfinder : Schubert, Peter, Dr.
Kantstrasse 5
W-7889 Grenzach-Wyhlen (DE)
Erfinder : Koberstein, Edgar, Dr.
Wolfskernstrasse 8
W-8755 Alzenau (DE)

**Beschreibung**

Die Erfindung betrifft allgemein einen Katalysator für die Reinigung der Abgase von Brennkraftmaschinen durch Oxidation und/oder Reduktion.

Im besonderen betrifft die Erfindung einen Katalysator für die Reinigung der Abgase von Brennkraftmaschinen mit Aluminiumoxid der Übergangsreihe als Träger, welcher 3 - 70 Gew.% $CeO_2$, 0 - 20 Gew.% $La_2O_3$, gegebenenfalls als Mischung mit anderen Seltenerdmetalloxiden und 1 - 20 Gew.% $ZrO_2$ und 0 - 10 Gew.% $Fe_2O_3$ und 0 - 20 Gew.% NiO als Promotor enthält, und einer auf den Träger aufgebrachten aktiven Phase aus 0,02 - 3 Gew.% Platin und/oder Palladium und Rhodium, mit einem Gewichtsverhältnis zwischen Platin und/oder Palladium und dem Rhodium von 1 : 2 bis 15 : 1, vorzugsweise 1 : 1 bis 3 : 1 und gegebenenfalls einem Gewichtsverhältnis zwischen Platin und Palladium von 10 : 1 bis 1 : 5, wobei der gegebenenfalls gitterstabilisierte Träger mit einer Lösung einer Promotorverbindung imprägniert und/oder durch Vermischen desselben mit einer Suspension von Oxiden, Hydroxiden oder Carbonaten des jeweiligen Promotorelements belegt, nachfolgend an Luft bei 300 - 900° C behandelt und dann mit einer Lösung von Verbindungen der Edelmetalle imprägniert, getrocknet und gegebenenfalls in einem Wasserstoff enthaltenden Gas, gegebenenfalls bei hydrothermalen Bedingungen, bei einer Temperatur im Bereich von 250 - 1050° C aktiviert wird und wobei der Katalysator gegebenenfalls in Form eines Überzugs auf einem inerten Träger aus Keramik oder Metall in einer Menge von 5 - 30 Gew.-%, bezogen auf das Gewicht des inerten Trägers, vorliegt.

Bedingt durch ein gesteigertes Umweltbewußtsein wird die Gesetzgebung hinsichtlich der Festschreibung von Abgasgrenzwerten für die Schadstoffe Kohlenmonoxid, Kohlenwasserstoffe und Stickoxide aus Verbrennungskraftmaschinen, insbesondere aus Kraftfahrzeugen, fortlaufend verschärft. Dies hat zur Folge, daß innerhalb der in USA, Japan und Europa vorgeschriebenen Testzyklen die sog. Kaltstartphase eine herausragende Bedeutung gewinnt. Es besteht daher ein Bedarf an Katalysatoren, die bereits bei möglichst niedrigen Abgastemperaturen die Schadstoffe in hohem Maße umsetzen können. Da gleichzeitig die Motorenentwicklung einen Trend zu Konzepten zeigt, die vermehrt die Arbeitsphasen mit Sauerstoffüberschuß (mageres Abgas) benutzen, ergeben sich auch für das Dauerstandsverhalten der Katalysatoren härtere Anforderungen. Weiterhin ist aus Kostengründen aber auch aus Gründen der Verfügbarkeit an Platingruppenmetallen ein Bedarf gegeben, die Menge an Edelmetall pro Katalysator abzusenken. Dabei können jedoch Einbußen in Aktivität und Haltbarkeit der Katalysatoren auftreten, die nicht akzeptabel sind.

Die Erfindung geht grundsätzlich von Katalysator-Zusammensetzungen aus, die in der DE-PS 29 07 106 und der EP 0 326 845 angebeben sind und erweitert und modifiziert diese in vorteilhafter Weise. Beide Dokumente beschreiben Katalysatoren, die in der aktiven Phase neben den Edelmetallen noch Unedelmetalle enthalten. In der DE-PS 29 07 106 handelt es sich bei den Unedelmetallen um Aluminium, Titan, Chrom, Mangan, Kobalt und/oder Nickel sowie Zinn.

Die EP 0 326 845 nennt dagegen nur Cer als Unedelmetall. Die Unedelmetalle werden in beiden Fällen in Form ihrer wasserlöslichen Verbindungen gleichzeitig mit den Edelmetallen auf den Träger durch Imprägnieren aufgebracht.

Aufgabe der Erfindung ist, die oben genannten Bedürfnisse durch eine Verbesserung der bekannten Katalysatoren in bezug auf das Kaltstartverhalten, der Mager-Dauerstandsfestigkeit und einer Absenkung der spezifischen Edelmetallbeladung zu erfüllen.

Bei den Katalysatoren gemäß der Erfindung ist nicht nur der stoffliche Aufbau, sondern auch die Art und Weise ihrer Herstellung bedeutsam.

Gegenstand der Erfindung ist ein Katalysator für die Reinigung der Abgase von Brennkraftmaschinen mit Aluminiumoxid der Übergangsreihe als Träger, welcher 3 - 70 Gew.-% $CeO_2$ und 1 - 20 Gew.-% $ZrO_2$ als Promotoren enthält und einer auf den Träger aufgebrachten aktiven Phase aus 0,02 - 3 Gew.-% Platin und/oder Palladium und Rhodium, mit einem Gewichtsverhältnis zwischen Platin und/oder Palladium und dem Rhodium von 1 : 2 bis 15 : 1, und gegebenenfalls einem Gewichtsverhältnis zwischen Platin und Palladium von 10 : 1 bis 1 : 5, wobei man den Träger mit einer Lösung der Promotorverbindungen imprägniert und/oder durch Vermischen desselben mit einer Suspension von Oxiden, Hydroxiden oder Carbonaten der jeweiligen Promotorelemente belegt, nachfolgend an Luft bei 300 - 900° C behandelt und dann imprägniert mit einer Lösung A von Verbindungen des Platins und/oder des Palladiums in einer Menge, welche mindestens 30 % der Gesamtmenge von Platin und/oder Palladium entspricht, trocknet und aktiviert, dann imprägniert mit einer Lösung B, welche die Verbindung von Rhodium, gegebenenfalls die Restmenge an Platin und/oder Palladium-Verbindung und ein oder mehrere Verbindungen von mindestens einem Nichtedelmetall aus der Reihe Lithium, Kalium, Rubidium, Magnesium, Calcium, Barium, Lanthan, Cer, Praseodym, Neodym, Samarium, Eisen, Kobalt und Nickel in einer Menge bis zur 5-fachen Masse des Gesamt-Edelmetalls enthält sowie erneut trocknet und aktiviert.

Die Aktivierung kann in einem Wasserstoff enthaltenden Gas, gegebenenfalls bei hydrothermalen Bedingungen, bei einer Temperatur im Bereich von 250 - 1050° C stattfinden.

In einer bevorzugten Ausführungsform weist der Träger aus Aluminiumoxid der Übergangsreihe als weitere Promotoren 0 - 20 Gew.-% $La_2O_3$, gegebenenfalls als Mischung mit anderen Seltenerdmetalloxiden, 0 - 10 Gew.-% $Fe_2O_3$ und 0 - 20 Gew.-% NiO auf.

Das Gewichtsverhältnis zwischen Platin und/oder Palladium und dem Rhodium sollte vorteilhafterweise zwischen 1 : 1 bis 3 : 1 liegen.

Der Katalysator kann in Form eines Überzugs auf einem inerten Träger aus Keramik oder Metall in einer Menge von 5 - 30 Gew.-%, bezogen auf das Gewicht des inerten Trägers, vorliegen.

Die prozentualen $CeO_2$-Mengen betragen im Katalysator bei Einsatz von geformten Trägern aus aktivem $Al_2O_3$ 3 bis etwa 20, vorzugsweise 4 bis 10 Gew.-%. Bei den Wabenkatalysatoren enthält der durch Dispersionsbeschichtung auf die inerte Wabe aufgebrachte Katalysator mindestens 15 Gew.-%.

Ein wesentliches erfindungsgemäßes Merkmal des neuen Katalysators ist die Mitverwendung bestimmter Nichtedelmetalle in unmittelbarer Nachbarschaft von Rhodium.

Im übrigen entspricht die grundsätzliche Zusammensetzung des Katalysators im wesentlichen an sich bekannten Formulierungen mit den Platingruppenmetallen Rhodium sowie Platin und/oder Palladium, aufgebracht auf einen Träger aus Aluminiumoxid der Übergangsreihe, welcher mit oxidischen Phasen Sauerstoffspeichernder und/oder trägerstabilisierender Zusätze, sog. Promotoren, versehen sind.

Dabei gelangen sowohl die Elemente der Platingruppe wie der Promotoren in bestimmten, im wesentlichen im bekannten Rahmen liegenden Mengen zum Einsatz, wenn auch diese hier auf den Erfindungszweck genauer abgestimmt sind.

Die erfindungswesentliche Plazierung der Nichtedelmetalle Li, K, Rubidium, Mg, Ca, Ba, La, Ce, Pr, Nd, Sm, Fe, Co, und/oder Ni in unmittelbarer Nachbarschaft von Rhodium ist an eine spezielle Herstellungsweise geknüpft, bei der promotorhaltige Aluminiumoxidträger zuerst mit einer Lösung von Pt und/oder Pd-Verbindungen imprägniert werden und nach Trocknen und Aktivieren, gegebenenfalls in einem $H_2$ enthaltenden Gas und gegebenenfalls bei hydrothermalen Bedingungen, d. h. z.B. Dämpfen in einer Wasserdampf enthaltenden Atmosphäre, mit einer das Rhodium und die genannten Nichtedelmetalle enthaltenden zweiten Lösung imprägniert und aktiviert werden. Dabei gilt die Maßgabe, in der ersten Lösung (A) mindestens 30 % der Gesamtmasse von Pt und/oder Pd vorzusehen, so daß ein großer Anteil dieser Elemente der Nachbarschaft zu den genannten Nichtedelmetallen entzogen bleibt.

Die erfindungsgemäß eingebrachten genannten Nichtedelmetalle können somit verstärkt in Wechselwirkung mit dem die Reduktionswirkung vermittelnden Rhodium treten.

Eine quantitative Trennung der örtlichen Sphären von Rhodium und Pt und/oder Pd braucht nicht vorzuliegen. Viel wesentlicher ist, daß die beiden Edelmetallspezies überwiegend nicht in miteinander verfilztem oder legiertem Zustand vorliegen, wofür die erfindungsgemäße Einbringung sorgt.

Der Katalysator kann als Trägerkatalysator, z. B. in kugelförmiger oder anders geformter Gestalt vorliegen (Schüttgut). Er kann aber auch als Überzug auf einem inerten, strukturverstärkenden Träger aus Keramik oder Metall vorliegen. Solche inerten Träger können Waben aus Cordierit, Mullit, α-Aluminiumoxid oder aus einer ferritischen Stahllegierung sein. Auch kompakte Formkörper aus den genannten Materialien sind verwendbar.

Eine günstige Ausführungsform des Katalysators besteht darin, daß bei Wabenkatalysatoren oder Schüttgut-Schalenkatalysatoren mit inertem Trägerkern 30 - 100 % der Gesamtmasse des die Promotoren enthaltenden Aluminiumoxidträgers vor dem Aufbringen von Lösung A) und 0 - 70 % dieser Gesamtmasse vor dem Aufbringen von Lösung B) als Überzug abgeschieden wird, wobei bei Teilabscheidung des Trägers die Promotoren in den Teilmassen des Trägers unterschiedliche Konzentrationen aufweisen und vorzugsweise die vor Aufbringen von Lösung B) abgeschiedene Teilmasse niedrigere Konzentrationen an den verwendeten Promotoren im Rahmen der vorgesehenen Konzentrationsbereiche aufweist als die Restmasse.

Es hat sich auch eine Katalysatorvariante als vorteilhaft erwiesen, bei der der Promotor $CeO_2$ in die vor Aufbringen von Lösung A) vorliegende Trägermasse in Form einer wasserlöslichen Verbindung, und der genannte Promotor in die vor Aufbringen von Lösung B) vorliegende Trägermasse durch Vermischen mit einer Suspension von Oxiden, Hydroxiden oder Carbonaten des Cers (sowie jeweils anschließende Zersetzung) eingebracht ist.

Mit der Erfindung werden folgende Vorteile erzielt:

1. Niedrigere Kaltstarttemperaturen für alle drei Schadstoffkomponenten, nämlich Kohlenmonoxid, Kohlenwasserstoffe und Stickoxide;

2. erhöhte Konversionsgrade für alle drei Schadstoffkomponenten, nämlich Kohlenmonoxid, Kohlenwasserstoffe und Stickoxide;

3. besseres Dauerstandsverhalten.

Durch die gegebene Leistungssteigerung bei den erfindungsgemäßen Katalysatoren eröffnet sich weiterhin die Möglichkeit, die Edelmetallgehalte insbesondere die Platingehalte pro Liter Katalysatorvolumen ohne wesentliche Aktivitätseinbußen abzusenken.

Die Erfindung wird nachfolgend anhand von Ausführungsbeispielen weiter erläutert.

Vergleichsbeispiel 1

Ein Wabenkörper aus Cordierit mit 62 Zellen/cm$^2$ wurde mit 180 g/l Katalysatorvolumen eines Oxidgemisches beschickt. Hierzu wurde eine wäßrige Suspension mit einem Feststoffgehalt von 48 Gew.% und folgender Zusammensetzung für das nach Aktivierung vorliegende Oxidgemisch verwendet:

| | |
|---|---|
| 70,3 Gew.-Teile | γ-Aluminiumoxid |
| 15,0 Gew.-Teile | Ceroxid, als Ammoniumcer(IV)-nitrat |
| 4,2 Gew.-Teile | Zirkonoxid, als Zirkonylacetat |
| 8,0 Gew.-Teile | Nickeloxid |
| 2,5 Gew.-Teile | Eisenoxid |

Nach der Belegung des Wabenkörpers mit der Oxidschicht wurde bei 120° C getrocknet und 2 Stunden bei 400° C aktiviert. Anschließend wurde der so beschichtete Wabenkörper in eine wäßrige Lösung von Hexachloroplatinsäure, Palladium(II)-chlorid und Rhodium(III)-chlorid im Gewichtsverhältnis Pt : Pd : Rh von 6 : 4 : 1 getaucht und getrocknet. Nach einer zweistündigen Temperung bei 350° C an Luft erfolgte schließlich die Reduktion der auf dem Trägermaterial abgeschiedenen Edelmetallsalze im Wasserstoffstrom bei einer Temperatur von 450° C für die Dauer von 4 Stunden. Der Gesamtedelmetallgehalt betrug nach dieser Behandlung 1,77 g/l Trägervolumen.

Beispiel 1

Ein keramischer Wabenkörper (62 Zellen/cm$^2$) wurde mit der gleichen Oxidschicht und auf die gleiche Weise wie im Vergleichsbeispiel 1 beschrieben, beschichtet, getrocknet und aktiviert. Anschließend wurde der so beschichtete Verstärker zunächst in eine wäßrige, Hexachloroplatinsäure und Palladium(II)-chlorid enthaltende Lösung A getaucht, getrocknet und 2 Stunden bei 350° C an Luft aktiviert. Die hierdurch aufgebrachte Menge an Platin betrug 100 Gew.%, an Palladium 35 Gew.%, bezogen auf die Gesamtmenge des jeweiligen Edelmetalls im fertigen Katalysator. Die Restmenge des Palladiums sowie das Rhodium wurden mittels eines zweiten Imprägnierschrittes mit einer Lösung B, die zusätzlich zu den Edelmetallsalzen Palladiumchlorid und Rhodiumchlorid das Nichtedelmetall Lithium in Form von Lithiumchlorid enthielt, auf dem Träger fixiert, getrocknet und aktiviert. Abschließend wurde 4 Stunden bei 450° C im Wasserstoffstrom reduziert. Der Gesamtedelmetallgehalt des fertigen Katalysators betrug 1,77 g/l Trägervolumen. Das Gewichtsverhältnis zwischen den Edelmetallen Pt : Pd und Rh war 6 : 4 : 1. Der Dotierungsanteil an Lithium betrug das 2,5-fache der Gesamtmenge an Edelmetall.

Beispiel 2

Die Präparation dieses Katalysators erfolgte analog Beispiel 1. Das durch die Edelmetallimprägnierlösung B zusätzlich eingebrachte Nichtedelmetall war hier jedoch Samarium als Samarium(III)-acetat. Die Samarium-Dotierungsmenge betrug das 0,5-fache der Edelmetall-Gesamtmasse.

Beispiel 3

Die Präparation dieses Katalysators erfolgte analog Beispiel 1. Das durch die Edelmetallimprägnierlösung B zusätzlich eingebrachte Nichtedelmetall war hier jedoch Kobalt als Kobaltnitrat. Dieser Kobalt-Dotierungsanteil betrug das 2-fache der Gesamtmenge an Edelmetall.

Beispiel 4

Die Präparation dieses Katalysators erfolgte analog Beispiel 1. Das durch die Edelmetallimprägnierlösung B zusätzlich eingebrachte Nichtedelmetall war hier jedoch Cer als Cer(III)-acetat. Diese Dotierungsmenge an Cer betrug das 4-fache der Gesamtmasse an Edelmetall.

Vergleichsbeispiel 2

Ein wabenförmiger keramischer Monolith (62 Zellen/cm$^2$) wurde mit insgesamt 160 g/l Trägervolumen eines Oxidgemisches beschichtet. Hierzu wurde eine wäßrige Suspension mit einem Feststoffgehalt von 51 Gew.% und folgender Zusammensetzung für das nach Aktivierung vorliegende Oxidgemisch verwendet:

59 Gew.-Teile    γ-Aluminiumoxid
30 Gew.-Teile    Ceroxid, als Cer(III)-acetat
3 Gew.-Teile     Zirkonoxid, als Zirkonylnitrat
8 Gew.-Teile     Lanthanoxid, als Lanthan(III)-nitrat

Nach der Belegung des Trägerkörpers mit der Oxidschicht wurde bei 130° C getrocknet und 2 Stunden bei 650° C aktiviert. Anschließend wurde der so beschichtete Wabenkörper in eine Lösung von Hexachloroplatinsäure und Rhodiumnitrat im Gewichtsverhältnis Pt : Rh von 2,5 : 1 getaucht, getrocknet und 2 Stunden bei 600° C an Luft aktiviert. Der Gesamtedelmetallgehalt betrug nach dieser Behandlung 0,88 g/l Trägervolumen.

### Beispiel 5

Ein keramischer Wabenkörper (62 Zellen/cm²) wurde mit der gleichen Oxidschicht und im wesentlichen auf die gleiche Weise wie im Vergleichsbeispiel 2 beschrieben, beschichtet. Im Unterschied zu Vergleichsbeispiel 2 wurde der wabenförmige Verstärker jedoch zunächst nur mit 2/3 der Gesamtmenge der Oxidschicht belegt. Der so beschichtete Wabenkörper wurde anschließend in eine wäßrige Hexachloroplatinsäurelösung A getaucht, getrocknet und 2 Stunden bei 600° C an Luft aktiviert. Danach wurde das letzte Drittel der Gesamtmenge der Oxidschicht in der bereits beschriebenen Weise aufgebracht, getrocknet und aktiviert, bevor der so beladene Verstärker in eine wäßrige, Rhodiumchlorid und Nickelacetat enthaltende Lösung B getaucht, getrocknet und 2 Stunden bei 600° C aktiviert wurde. Der Gesamtedelmetallgehalt des fertigen Katalysators betrug 0,88 g/l Trägervolumen. Das Gewichtsverhältnis Pt : Rh war 2,5 : 1. Der Dotierungsanteil an Nickel betrug das doppelte der Gesamtmasse an Edelmetall.

### Beispiel 6

Die Präparation dieses Katalysators erfolgte analog Beispiel 5 mit dem Unterschied, daß das durch die Edelmetallimprägnierlösung B zusätzlich eingebrachte Nichtedelmetall Barium war, eingesetzt als Bariumnitrat. Dieser Barium-Dotierungsanteil betrug das 3-fache der Gesamtmenge an Edelmetall.

### Beispiel 7

Die Beschichtung des keramischen Wabenkörpers erfolgte mit der gleichen Oxidschicht und im wesentlichen auf die gleiche Weise wie im Vergleichsbeispiel 2. Im Unterschied zu Vergleichsbeispiel 2 wurde der wabenförmige Verstärker jedoch zunächst nur mit 1/3 der Gesamtmenge der Oxidschicht belegt. Der so beschichtete Wabenkörper wurde anschließend in eine wäßrige Hexachloroplatinsäurelösung A getaucht, getrocknet und 2 Stunden bei 600° C an Luft aktiviert. Danach wurden die fehlenden beiden Drittel der Gesamtmenge der Oxidschicht in der bereits beschriebenen Weise aufgebracht, getrocknet und 2 Stunden bei 600° C aktiviert, bevor der so beladene Verstärker in eine wäßrige, Rhodiumnitrat und Lanthannitrat enthaltende Lösung B getaucht, getrocknet und 2 Stunden bei 600° C aktiviert wurde. Der Gesamtedelmetallgehalt des fertigen Katalysators betrug 0,88 g/l Trägervolumen. Das Gewichtsverhältnis Pt : Rh war 2,5 : 1. Der Lanthan-Dotierungsanteil betrug das 1,5-fache der Edelmetall-Gesamtmasse.

### Beispiel 8

Ein keramischer Wabenkörper mit 62 Zellen/cm² wurde mit der gleichen Oxidschicht und im wesentlichen auf die gleiche Weise wie im Vergleichsbeispiel 2 beschrieben, beschichtet. Im Unterschied zu Vergleichsbeispiel 2 wurde der wabenförmige Verstärker jedoch zunächst nur mit der Hälfte der Gesamtmenge der Oxidschicht belegt. Der so beschichtete Wabenkörper wurde anschließend in eine wäßrige Hexachloroplatinsäurelösung A getaucht, getrocknet und 2 Stunden bei 600° C an Luft aktiviert. Danach wurde die zweite Hälfte der Gesamtmenge der Oxidschicht in der beschriebenen Weise aufgebracht, getrocknet und aktiviert, bevor der so beladene Verstärker in eine Rhodiumnitrat und Bariumnitrat enthaltende Lösung B getaucht, getrocknet und 2 Stunden bei 600° C aktiviert wurde. Der Gesamtedelmetallgehalt des fertigen Katalysators betrug 0,88 g/l Trägervolumen. Das Gewichtsverhältnis Pt : Rh war 2,5 : 1. Der Dotierungsanteil an Barium entsprach der Edelmetall-Gesamtmenge.

Beispiel 9

Die Präparation dieses Katalysators erfolgte analog Vergleichsbeispiel 2 mit dem Unterschied, daß nach der Aufbringung der Oxidschicht der so beladene Wabenkörper zunächst in eine wäßrige Hexachloroplatinsäurelösung A getaucht, getrocknet und 2 Stunden bei 600° C an Luft aktiviert wurde. Das Rhodium wurde mittels eines zweiten Imprägnierschrittes mit einer Lösung B, die zusätzlich zum Rhodiumnitrat das Nichtedelmetall Eisen in Form von Eisen(III)-chlorid enthielt, auf dem Träger fixiert, getrocknet und 2 Stunden bei 600° C aktiviert.

Der Gesamtedelmetallgehalt des fertigen Katalysators betrug 0,88 g/l Trägervolumen. Das Gewichtsverhältnis Pt : Rh betrug 2,5 : 1. Der Dotierungsanteil an Eisen betrug das 2-fache der Edelmetall-Gesamtmasse.

Beispiel 10

Die Präparation dieses Katalysators erfolgte analog Beispiel 9. Die mit der Edelmetallimprägnierlösung B zusätzlich eingebrachte Dotierungsmenge an Eisen betrug jedoch das 5-fache der Edelmetall-Gesamtmasse.

Vergleichsbeispiel 3

Ein wabenförmiger Verstärker aus Cordierit mit 62 Zellen/cm$^2$ wurde mit 130 g/l Trägervolumen eines Oxidgemisches beschichtet. Hierzu wurde eine wäßrige Suspension mit einem Feststoffgehalt von 58 Gew.% und folgender Zusammensetzung für das nach Aktivierung vorliegende Oxidgemisch verwendet:

| 31 Gew.-Teile | $\gamma$-Aluminiumoxid |
| 65 Gew.-Teile | Ceroxid |
| 2 Gew.-Teile | Zirkonoxid, als Zirkonylnitrat |
| 2 Gew.-Teile | NiO, als Nickel(II)-acetat |

Nach der Belegung des Trägerkörpers mit der Oxidschicht wurde bei 150° C getrocknet und 3 Stunden bei 500° C aktiviert. Anschließend wurde der so beschichtete Verstärker in eine wäßrige Lösung von Tetraamminplatin(II)-hydroxid, Palladium(II)-chlorid und Rhodium(III)-chlorid im Gewichtsverhältnis Pt : Pd : Rh von 2 : 1 : 1 getaucht und getrocknet.

Nach einer einstündigen Temperung bei 500° C an Luft erfolgte schließlich die Reduktion der auf dem Trägermaterial abgeschiedenen Edelmetallsalze in einem Wasserdampf enthaltenden Wasserstoffstrom ($H_2O$ : $H_2$ = 1 : 3) bei einer Temperatur von 550° C für die Dauer von 3 Stunden. Der Gesamtedelmetallgehalt betrug nach dieser Behandlung 0,64 g/l Trägervolumen.

Beispiel 11

Ein keramischer Wabenkörper (62 Zellen/cm$^2$) wurde mit der gleichen Oxidschicht versehen und auf die gleiche Weise wie im Vergleichsbeispiel 1 beschrieben, beschichtet, getrocknet und aktiviert. Anschließend wurde der so beschichtete Verstärker zunächst in eine wäßrige, Tetraaminplatin(II)-hydroxid und Palladium(II)-chlorid enthaltende Lösung A getaucht, getrocknet und 1 Stunde bei 500° C aktiviert. Die damit aufgebrachte Menge an Platin betrug 100 Gew.%, an Palladium 60 Gew.%, bezogen auf die Gesamtmenge des jeweiligen Edelmetalls am fertigen Katalysator. Die Restmenge des Palladiums sowie das Rhodium wurden mittels eines zweiten Imprägnierschrittes mit einer Lösung B, die zusätzlich zu den Edelmetallsalzen Palladiumchlorid und Rhodiumchlorid die Nichtedelmetalle Calcium und Praseodym (Massenverhältnis Ca : Pr = 2 : 1) in Form ihrer Nitrate enthielt, auf dem Träger fixiert, getrocknet und aktiviert. Abschließend wurde 3 Stunden bei 550° C in einem Wasserdampf enthaltenden Wasserstoffstrom ($H_2O$ : $H_2$ = 1 : 3) reduziert. Der Gesamtedelmetallgehalt des fertigen Katalysators war 0,64 g/l Trägervolumen. Die Gesamtmenge an den Dotierungselementen Calcium und Praseodym betrug das 4-fache der Gesamtmasse an Edelmetall.

Beispiel 12

Die Präparation dieses Katalysators erfolgte analog Beispiel 11 mit dem Unterschied, daß mit der Edelmetallimprägnierung A 90 Gew.% des Platins und 80 Gew.% des Palladiums und mit der Edelmetallimprägnierlösung B 100 Gew.% des Rhodiums, 10 Gew.% des Platins und 20 Gew.% des Palladiums, zusammen mit den Nichtedelmetallen Kalium (als Chlorid), Barium (als Nitrat) und Eisen (als Nitrat) im Massenverhältnis K : Ba : Fe = 1 : 3 : 1 auf dem Träger fixiert wurden. Die Gesamtmenge an Edelmetall des fertigen Katalysators betrug ebenfalls 0,64 g/l Trägervolumen, der Dotierungsanteil an den Nichtedelmetallen Kalium, Barium und Eisen betrug insgesamt das 5-fache der Edelmetall-Gesamtmasse.

EP 0 441 173 B1

Vergleichsbeispiel 4

Ein wabenförmiger keramischer Verstärker mit 62 Zellen/cm² wurde mit 145 g/l Trägervolumen eines Oxidgemisches beschichtet. Hierzu wurde eine wäßrige Suspension mit einem Feststoffgehalt von 56 Gew.% und folgender Zusammensetzung für das nach Aktivierung vorliegende Oxidgemisch verwendet:

| 56 Gew.-Teile | $\gamma$-Aluminiumoxid |
| 31 Gew.-Teile | Ceroxid |
| 8 Gew.-Teile | Zirkonoxid |
| 5 Gew.-Teile | Lanthanoxid, als Lanthan(III)-acetat |

Nach der Belegung des Wabenkörpers mit der Oxidschicht wurde bei 135° C getrocknet und 1 Stunde bei 350° C aktiviert. Der so beschichtete Verstärker wurde sodann in eine wäßrige Lösung von Palladiumnitrat und Rhodiumchlorid im Gewichtsverhältnis Pd : Rh von 4 : 1 getaucht, getrocknet, 1 Stunde bei 400° C an Luft und weitere 3 Stunden bei 400° C im Wasserstoffstrom behandelt. Der Gesamtgehalt an Edelmetall des fertigen Katalysators war 0,78 g/l Trägervolumen.

Beispiel 13

Ein Wabenkörper aus Cordierit mit 62 Zellen/cm² wurde mit 145 g/l Trägervolumen eines Oxidgemisches, dessen Summenzusammensetzung der im Vergleichsbeispiel 4 entsprach, belegt. Im Unterschied zu Vergleichsbeispiel 4 wurden jedoch zunächst 90 g/l Trägervolumen einer Oxidschicht aufgebracht. Dabei wurde eine wäßrige Suspension mit einem Feststoffgehalt von 54 Gew.% und folgender Zusammensetzung für das nach Aktivierung vorliegende Oxidgemisch verwendet:

| 45,8 Gew.-Teile | $\gamma$-Aluminiumoxid |
| 38,9 Gew.-Teile | Ceroxid |
| 9,6 Gew.-Teile | Zirkonoxid |
| 5,0 Gew.-Teile | Lanthan(III)-oxid, als Lanthanacetat |

Nach der Belegung des Wabenkörpers mit dieser ersten Oxidschicht wurde bei 135° C getrocknet und 1 Stunde bei 350° C aktiviert. Der so beschichtete Wabenkörper wurde anschließend in eine wäßrige Palladiumnitratlösung A getaucht, getrocknet und 1 Stunde bei 400° C an Luft behandelt.

Danach wurden weitere 55 g/l Trägervolumen einer zweiten Oxidschicht aufgebracht. Hierzu wurde eine wäßrige Suspension mit einem Feststoffgehalt von 55 Gew.% und folgender Zusammensetzung für das nach Aktivierung vorliegende Oxidgemisch eingesetzt:

| 72,7 Gew.-Teile | $\gamma$-Aluminiumoxid |
| 18,2 Gew.-Teile | Ceroxid, als Cer(III)-nitrat |
| 5,5 Gew.-Teile | Zirkonoxid, als Zirkonylacetat |
| 3,6 Gew.-Teile | Lanthan(III)-oxid |

Nach abermaliger Trocknung und Aktivierung wurde der so beschichtete Verstärker in eine wäßrige, Rhodium(III)-chlorid, Lithiumchlorid und Neodym(III)-nitrat enthaltende Lösung B getaucht, getrocknet, 1 Stunde bei 400° C an Luft aktiviert und weitere 3 Stunden bei 400°C im Wasserstoffstrom reduziert. Der Gesamtedelmetallgehalt des fertigen Katalysators betrug 0,78 g/l Trägervolumen. Das Gewichtsverhältnis Pd : Rh war 4 : 1. Der Anteil an den Nichtedelmetallen Lithium und Neodym betrug das 3,5-fache der Edelmetall-Gesamtmasse. Das Massenverhältnis Li : Nd war 1 : 1.

Vergleichsbeispiel 5

Ein keramischer Wabenkörper (62 Zellen/cm²) wurde mit 150 g/l Trägervolumen eines Oxidgemisches beschichtet. Hierzu wurde eine wäßrige Suspension mit einem Feststoffgehalt von 68 Gew.% und folgender Zusammensetzung für das nach Aktivierung vorliegende Oxidgemisch verwendet:

| 49 Gew.-Teile | $\gamma$-Aluminiumoxid |
| 41 Gew.-Teile | Ceroxid, als Cer(III)-oxalat-nona-hydrat |
| 10 Gew.-Teile | Zirkonoxid, als Zirkonylnitrat |

Nach der Belegung des Wabenkörpers mit der Oxidschicht wurde bei 150° C getrocknet und 3 Stunden bei 350° C aktiviert. Anschließend wurde der so beschichtete Verstärker in eine wäßrige Lösung von Tetraamminplatin(II)-nitrat und Rhodium(III)-chlorid getaucht, getrocknet und 2 Stunden bei 350° C aktiviert. Der Gesamtedelmetallgehalt des fertigen Katalysators betrug 0,33 g/l Trägervolumen. Das Gewichtsverhältnis der Edelmetalle Pt : Rh war 1 : 1.

7

### Beispiel 14

Ein keramischer Verstärker wurde mit der gleichen Oxidschicht und auf die gleiche Weise wie im Vergleichsbeispiel 5 beschrieben, beschichtet, getrocknet und aktiviert. Anschließend wurde der so beschichtete Wabenkörper zunächst in eine wäßrige Tetraamminplatin(II)-nitratlösung A getaucht, getrocknet und 2 Stunden bei 350° C an Luft aktiviert. Die hierdurch aufgebrachte Menge an Platin betrug 95 Gew.%, bezogen auf die Gesamtmenge des Platins am fertigen Katalysator, Die Restmenge des Platins sowie das Rhodium wurde mittels eines zweiten Imprägnierschrittes mit einer Lösung B, die zusätzlich zu den Edelmetallsalzen Hexachloroplatinsäure und Rhodium(III)-nitrat das Nichtedelmetall Rubidium als Rubidiumnitrat enthielt, auf dem Träger fixiert, getrocknet undf aktiviert.

Der Gesamtedelmetallgehalt des fertigen Katalysators betrug 0,33 g/l Trägervolumen. Das Gewichtsverhältnis Pt : Rh war 1 : 1. Der Dotierungsanteil an Rubidium betrug das 3-fache der Gesamtmenge an Edelmetall.

### Vergleichsbeispiel 6

Ein Wabenkörper aus Cordierit mit 62 Zellen/cm$^2$ wurde mit 169 g/l Trägervolumen eines Oxidgemisches beschichtet. Hierzu wurde eine wäßrige Suspension mit einem Feststoffgehalt von 62 Gew.% und folgender Zusammensetzung für das nach Aktivierung vorliegende Oxidgemisch verwendet:

| | |
|---|---|
| 67,5 Gew.-Teile | $\gamma$-Aluminiumoxid |
| 28,5 Gew.-Teile | Ceroxid, als Cer(III)-acetat |
| 2,6 Gew.-Teile | Zirkonoxid, als Zirkonylacetat |
| 1,4 Gew.-Teile | Eisen(III)-oxid |

Der mit der Oxidschicht belegte Verstärker wurde bei 135° C getrocknet und 4 Stunden bei 300° C an Luft aktiviert. Anschließend wurde der so beschichtete Wabenkörper in eine wäßrige Lösung von Platinnitrat und Rhodiumchlorid getaucht und getrocknet. Nach einer zweistündigen Temperung bei 400° C an Luft erfolgte schließlich die Reduktion der auf dem Trägermaterial abgeschiedenen Edelmetallsalze im Wasserdampf enthaltenden Wasserstoff-Stickstoffstrom (Volumenverhältnis $N_2 : H_2 : H_2O = 87 : 3 : 10$) bei einer Temperatur von 880° C für die Dauer von 2,5 Stunden. Der Gesamtedelmetallbehalt betrug nach dieser Behandlung 1,06 g/l Trägervolumen. Das Gewichtsverhältnis Pt : Rh war 3 : 1.

### Beispiel 15

Ein keramischer Wabenkörper (62 Zellen/cm$^2$) wurde mit der gleichen Oxidschicht und auf die gleiche Weise wie im Vergleichsbeispiel 6 beschrieben, beschichtet, getrocknet und aktiviert. Anschließend wurde der so beschichtete Verstärker zunächst in eine wäßrige, Platinnitrat enthaltende Lösung A getaucht, getrocknet und 2 Stunden bei 400° C an Luft aktiviert. Die hierdurch aufgebrachte Menge an Platin betrug 80 Gew.% der Gesamtmenge des Platins am fertigen Katalysator. Die Restmenge des Platins und des Rhodiums wurden in einem zweiten Imprägnierschritt mit einer wäßrigen Lösung B, die zusätzlich zu den Edelmetallsalzen Hexachloroplatin(IV)-säure und Rhodium(III)-chlorid das Nichtedelmetall Magnesium in Form von Magnesiumchlorid enthielt, auf dem Träger fixiert, getrocknet und aktiviert. Abschließend wurde 2,5 Stunden bei 880° C im Wasserdampf enthaltenden Stickstoff-Wasserstoffstrom (Volumenverhältnis $N_2 : H_2 : H_2O = 87 : 3 : 10$) reduziert. Der Gesamtedelmetallgehalt des fertigen Katalysators betrug 1,06 g/l Trägervolumen. Das Gewichtsverhältnis der Edelmetalle Pt : Rh war 3 : 1. Der Dotierungsanteil an Magnesium betrug das 1,5-fache der Gesamtmenge an Edelmetall.

### Beispiel 16

Die Präparation dieses Katalysators erfolgte analog Beispiel 15 mit dem Unterschied, daß durch die Edelmetallimprägnierlösung B anstelle von Magnesium die Nichtedelmetalle Nickel und Barium im Gewichtsverhältnis Ni : Ba von 1 : 1 als Nickelnitrat und Bariumnitrat zusätzlich eingebracht wurden.

Diese Dotierungsmenge an Nichtedelmetall betrug das 3,2-fache der Edelmetall-Gesamtmasse.

### Vergleichsbeispiel 7

Ein kugelförmiger Katalysator aus $Al_2O_3$ mit Partikeldurchmessern zwischen 2 und 4 mm, einer Schüttdichte von 568 kg/m$^3$, einer durchschnittlichen Druckfestigkeit von 52 N und einer spezifischen Oberfläche von 102 m$^2$/g wird mit einer wäßrigen Ceracetat- und Zirkonylacetatlösung imprägniert, getrocknet und 1 Stunde bei 550° C getempert. Die Katalysatorvorstufe wird anschließend mit einer Lösung von $H_2PtCl_6$, $PdCl_2$ und $RhCl_3$ belegt, getrocknet und 30 Min. bei 500° C in Luft aktiviert. Der fertige Katalysator enthält pro $m^3$ Volumen 30 kg $CeO_2$, 3 kg $ZrO_2$, 570 g Pt, 228 g Pd und 71 g Rh.

## Beispiel 17

Die Katalysatorvorstufe nach Vergleichsbeispiel 7 wird zunächst mit einer Lösung von $H_2PtCl_6$ und $PdCl_2$, die Pd und die Hälfte des gesamten Platins enthält, imprägniert, getrocknet und 30 Min. bei 850° C calciniert. Anschließend wird auf gleiche Weise $RhCl_3$ und die Restmenge $H_2PtCl_6$, zusammen mit Bariumnitrat aufgebracht, getrocknet und 30 Min. bei 550° C aktiviert. Die Dotierungsmenge an Barium betrug das 3-fache der gesamten Edelmetallmenge, die entsprechend Vergleichsbeispiel 7 gewählt wurde.

## Beispiel 18

Die Katalysatorvorstufe nach Vergleichsbeispiel 7 wird zunächst mit $H_2PtCl_6$ imprägniert, getrocknet und 1 Stunde bei 500° C calciniert. Nachfolgend wird die erhaltene Zwischenstufe mit einer Lösung von $RhCl_3$, $PdCl_2$ und Calciumnitrat belegt, getrocknet und 2 Stunden bei 550° C in Formiergas ($N_2 : H_2 = 95 : 5$) aktiviert. Der Anteil an Calcium entsprach dem doppelten der Gesamtmasse an Edelmetall, die entsprechend Vergleichsbeispiel 7 gewählt wurde.

## Testung der Katalysatoren

Die Prüfung der vorstehend beschriebenen Katalysatoren hinsichtlich ihrer Eigenschaften bei der simultanen Umsetzung der Abgasschadstoffe Kohlenmonoxid (CO), Kohlenwasserstoff (HC) und Stickoxide ($No_x$) erfolgte weitgehend in einer Testanlage, die mit einem synthetischen Gasgemisch, entsprechend dem einer Verbrennungskraftmaschine arbeitet. Die Abmessungen der Testkatalysatoren waren zylindrisch mit den Maßen Durchmesser x Höhe = 1" x 3". Die Raumgeschwindigkeit betrug 50.000 $h^{-1}$. Als Kohlenwasserstoffkomponente wurde exemplarisch Propan verwendet. Ein Teil der Katalysatorproben wurde an einem Motorprüfstand untersucht.

Die Testung erfolgte an frisch präparierten Katalysatoren und an Proben, die zuvor 24 Stunden an Luft bei 950° c im Ofen gealtert wurden. Diese Behandlung (Ofenalterung) simuliert erfahrungsgemäß recht gut die harten Anforderungen an den Katalysator im Fahrzeug bei längeren Laufstrecken unter weitgehend magerer Betriebsweise des Motors. Ein Vergleich der Ergebnisse der frischen und gealterten Katalysatoren beschreibt ihr Dauerstandsverhalten.

## Testung des Kaltstartverhaltens der Katalysatoren mit synthetischem Abgas

Zur Beschreibung des Kaltstartverhaltens der Katalysatoren wurde die Temperatur des Abgases linear von 75° C bis 450° C mit einer Heizrate von 15° C/min. hochgefahren. Dabei wurde die Abgastemperatur gegen die Konvertierung der Schadstoffe CO, HC, NO aufgezeichnet. Die Temperaturen, bei denen ein Umsatzgrad von 50 % erzielt wird, wird kurz mit dem Index 50 bezeichnet und dient als Maß für die Anspringfreudigkeit des Katalysators hinsichtlich der jeweiligen Schadstoffumsetzung. Je niedriger diese Anspringtemperaturen sind, desto effektiver ist der Katalysator.

Das Anspringverhalten der Proben wurde sowohl bei fetter ($\lambda = 0,98$) als auch bei magerer ($\lambda = 1,01$) Abgasmischung getestet. Die Zusammensetzung des synthetischen Abgases beim Kaltstart-Test ist in Tabelle 1 dargestellt. Die Gasmischung für die Simulation eines fetten Abgases ($\lambda = 0,98$) unterschied sich von der Zusammensetzung eines mageren Abgases lediglich dadurch, daß der Sauerstoffanteil entsprechend kleiner und der Stickstoffanteil entsprechend größer gewählt wurden.

**Tabelle 1:** Zusammensetzung des synthetischen Abgases für die Untersuchung des Kaltstartverhaltens der Katalysatoren

| Abgas-komponente | Luftzahl $\lambda$ | |
|---|---|---|
| | $\lambda = 0,98$ (fett | $\lambda = 1,01$ mager |
| $N_2$ | 73,24 | 72,55 |
| $O_2$ | 0,73 | 1,42 |
| $CO_2$ | 14,00 | |
| CO | 1,40 | |
| $H_2$ | 0,47 | |
| $C_3H_8$ | 0,06 | |
| NO | 0,10 | |
| $H_2O$ | 10,00 | |

**Testung des Konversionsverhaltens der Katalysatoren mit synthetischem Abgas**

Zur Untersuchung des Konversionsverhaltens der Katalysatoren wurde der Umsatzgrad der Schadstoffe CO, HC und NO in Abhängigkeit von der Luftzahl $\lambda$ bei einer Abgastemperatur von 400° C am Synthesegas-Testprüfstand gemessen. Um die dynamischen Verhältnisse am Fahrzeug zu simulieren, wurde mit einer Frequenz von 0,5 Hz und einer Amplitude von $\Delta\lambda = \pm 0,059$ um den Lambda-Mittelwert gewobbelt. Die Zusammensetzung des synthetischen Abgases ist durch einen Grundgasstrom und einen Wobbelgasstrom gekennzeichnet (vgl. Tabelle 2).

**Testung des Kaltstartverhaltens am Motortestprüfstand**

Das Abgas wurde von einem 1,8 l Ottomotor (90 PS) erzeugt und mittels eines Wärmetauschers auf die gewünschte Abgastemperatur gebracht. Die dazugehörigen Gleichgewichtskonzentrationen wurden registriert. Untersucht wurde der Temperaturbereich von 200 bis 450°C im Schatten von 10° C. Die Temperatur, bei der 50 % des jeweiligen Schadstoffes konvertiert wird, wurde durch Interpolation bestimmt. Die Charakterisierung erfolgte für fettes und mageres Abgas bei $\lambda$-Werten von 0,984 und 1,02.

Tabelle 2:     Zusammensetzung des synthetischen
               Abgases zur Untersuchung des dynamischen
               Konversionsverhaltens der Katalysatoren

(A) Grundgasmischung

| Abgaskomponente | Gehalt [Vol%] |
|---|---|
| $CO_2$ | 14,000 |
| $CO$ | 0,140 |
| $H_2$ | 0,047 |
| $C_3H_8$ (Propan) | 0,060 |
| $NO$ | 0,100 |
| $H_2O$ | 10,000 |

(B) Zusätzliche Komponenten der Grundgasmischung
    zur Einhaltung der Luftzahl $\lambda$

| Luftzahl $\lambda$ | Abgaskomponenten [Vol%] | |
|---|---|---|
| | $O_2$ | $N_2$ |
| 0,97 | 0 | 72,293 |
| 0,98 | 0,230 | 72,063 |
| 0,99 | 0,460 | 71,833 |
| 1,00 | 0,690 | 71,603 |
| 1,01 | 0,920 | 71,373 |
| 1,02 | 1,150 | 71,143 |

(C) Wobbelpulse mit einer Frequenz von 0,5 Hz

| Pulse | Komponente | Gehalt [Vol%] |
|---|---|---|
| mager | $O_2$ | 1,000 |
| | $N_2$ | 2,360 |
| fett | $CO$ | 2,52 |
| | $H_2$ | 0,84 |

**Testung des dynamischen Konversionsverhaltens am Motortestprüfstand**

Die Untersuchungen des dynamischen Konversionsverhaltens wurden ebenfalls mit einem 1,8 l Ottomotor (90 PS) durchgeführt. Die Abgastemperatur betrug 400° C, die Abgaszusammensetzung entsprach einem Lambdawert von 0,965 bzw. 0,995 bzw. 1.008. Zur Simulation der dynamischen Verhältnisse am Fahrzeug im Straßenverkehr wurde mit einer Frequenz von 1,0 Hertz und einer Amplitude von $\Delta\lambda = \pm 0,034$ ($\Delta$ A/F = $\pm$ 0,5) um den Lambdawert gewobbelt. Der dazugehörige Konversionsgrad der Schadstoffkomponenten CO, HC, $NO_x$ wurde registriert.

Tabelle 3: Kaltstartverhalten der frischen Katalysatoren bei fettem Abgas ($\lambda = 0,98$) (Synthesegastest)

| Beispiel | Anspringtemperatur [°C] für 50 %-Konversion | | |
|---|---|---|---|
| | $CO_{50}$ | $HC_{50}$ | $NO_{50}$ |
| V 1 | 215 | 287 | 217 |
| B 1 | 196 | 253 | 195 |
| B 2 | 189 | 247 | 193 |
| B 3 | 194 | 256 | 191 |
| B 4 | 192 | 251 | 196 |
| V 2 | 215 | 227 | 220 |
| B 5 | 192 | 211 | 198 |
| B 6 | 189 | 208 | 191 |
| B 7 | 195 | 215 | 195 |
| B 8 | 209 | 221 | 212 |
| B 9 | 196 | 207 | 196 |
| B 10 | 214 | 229 | 219 |
| V 3 | 211 | 219 | 214 |
| B 11 | 189 | 197 | 192 |
| B 12 | 183 | 191 | 185 |
| V 4 | 218 | 235 | 225 |
| B 13 | 187 | 198 | 190 |

Tabelle 4: Kaltstartverhalten der gealterten
Katalysatoren bei fettem Abgas ($\lambda$ = 0,98)
(Synthesegastest)

| Beispiel | Anspringtemperatur [$^\circ$C] für 50 %-Konversion | | |
|---|---|---|---|
| | $CO_{50}$ | $HC_{50}$ | $NO_{50}$ |
| V 1 | 272 | 441 | 274 |
| B 1 | 255 | 407 | 258 |
| B 2 | 251 | 417 | 255 |
| B 3 | 248 | 412 | 252 |
| B 4 | 257 | 421 | 256 |
| V 2 | 239 | 375 | 257 |
| B 5 | 204 | 327 | 217 |
| B 6 | 211 | 332 | 221 |
| B 7 | 201 | 325 | 213 |
| B 8 | 240 | 371 | 249 |
| B 9 | 209 | 341 | 233 |
| B 10 | 235 | 369 | 252 |
| V 3 | 245 | 381 | 260 |
| B 11 | 212 | 333 | 218 |
| B 12 | 205 | 326 | 208 |
| V 4 | 250 | 397 | 257 |
| B 13 | 215 | 359 | 219 |

Tabelle 5:  Kaltstartverhalten der frischen
            Katalysatoren bei magerem Abgas ($\lambda$ = 1,01)
            (Synthesegastest)

| Beispiel | Anspringtemperatur [$^{\circ}$C] für 50 %-Konversion | | |
|----------|---------------|----------------|----------------|
|          | $CO_{50}$ | $HC_{50}$ | $NO_{50}$ |
| V 1  | 199 | 230 | (nicht erreicht) |
| B 1  | 173 | 207 | - |
| B 2  | 170 | 201 | - |
| B 3  | 178 | 203 | - |
| B 4  | 175 | 199 | - |
| V 2  | 205 | 211 | - |
| B 5  | 185 | 193 | - |
| B 6  | 182 | 189 | - |
| B 7  | 184 | 188 | - |
| B 8  | 200 | 209 | - |
| B 9  | 183 | 190 | - |
| B 10 | 208 | 213 | - |
| V 3  | 197 | 206 | - |
| B 11 | 171 | 185 | - |
| B 12 | 168 | 179 | - |
| V 4  | 212 | 219 | - |
| B 13 | 178 | 190 | - |

Tabelle 6: Kaltstartverhalten der gealterten
Katalysatoren bei magerem Abgas ($\lambda$ = 1,01)
(Synthesegastest)

| Beispiel | Ansspringtemperatur [$^{\circ}$C] für 50 %-Konversion | | |
|----------|:---:|:---:|:---:|
| | $CO_{50}$ | $HC_{50}$ | $NO_{50}$ |
| V 1 | 263 | 359 | (nicht erreicht) |
| B 1 | 245 | 327 | - |
| B 2 | 240 | 313 | - |
| B 3 | 247 | 309 | - |
| B 4 | 248 | 312 | - |
| V 2 | 231 | 236 | - |
| B 5 | 192 | 198 | - |
| B 6 | 198 | 207 | - |
| B 7 | 190 | 196 | - |
| B 8 | 228 | 233 | - |
| B 9 | 199 | 210 | - |
| B 10 | 233 | 240 | - |
| V 3 | 227 | 243 | - |
| B 11 | 195 | 200 | - |
| B 12 | 189 | 194 | - |
| V 4 | 240 | 257 | - |
| B 13 | 208 | 223 | - |

**Tabelle 7:** Dynamisches Konvertierungsverhalten der frischen Katalysatoren (Synthesegastest)

| Beispiel | % Konversion | | | | | | | | | | | | | | | | | |
|---|---|---|---|---|---|---|---|---|---|---|---|---|---|---|---|---|---|---|
| | $\lambda=0,97$ | | | $\lambda=0,98$ | | | $\lambda=0,99$ | | | $\lambda=1,00$ | | | $\lambda=1,01$ | | | $\lambda=1,02$ | | |
| | CO | HC | NO | CO | HC | NO | CO | HC | NO | CO | HC | NO | CO | HC | NO | CO | HC | NO |
| V 1 | 49 | 88 | 97 | 57 | 90 | 98 | 68 | 92 | 93 | 88 | 94 | 90 | 91 | 94 | 52 | 93 | 94 | 41 |
| B 1 | 57 | 93 | 99 | 68 | 95 | 99 | 79 | 98 | 99 | 91 | 99 | 95 | 99 | 99 | 60 | 99 | 99 | 50 |
| B 2 | 59 | 94 | 99 | 70 | 94 | 99 | 81 | 97 | 99 | 93 | 100 | 97 | 100 | 99 | 62 | 99 | 99 | 52 |
| B 3 | 55 | 96 | 99 | 67 | 96 | 99 | 79 | 99 | 99 | 91 | 100 | 97 | 99 | 100 | 59 | 99 | 100 | 49 |
| B 4 | 57 | 93 | 99 | 69 | 93 | 99 | 79 | 97 | 98 | 92 | 99 | 96 | 100 | 99 | 61 | 100 | 99 | 52 |
| V 2 | 57 | 94 | 99 | 66 | 95 | 99 | 74 | 98 | 98 | 93 | 99 | 96 | 97 | 99 | 63 | 97 | 98 | 56 |
| B 5 | 65 | 98 | 99 | 78 | 98 | 100 | 82 | 99 | 100 | 98 | 99 | 99 | 100 | 99 | 73 | 99 | 99 | 62 |
| B 6 | 69 | 99 | 100 | 79 | 99 | 100 | 86 | 99 | 100 | 99 | 99 | 99 | 100 | 100 | 74 | 100 | 100 | 63 |
| B 7 | 63 | 98 | 100 | 79 | 99 | 100 | 85 | 99 | 100 | 99 | 99 | 99 | 100 | 100 | 71 | 100 | 100 | 61 |
| B 8 | 59 | 96 | 99 | 68 | 98 | 99 | 77 | 99 | 99 | 95 | 99 | 98 | 99 | 99 | 68 | 99 | 99 | 59 |
| B 9 | 68 | 98 | 100 | 81 | 99 | 100 | 87 | 99 | 99 | 99 | 99 | 99 | 100 | 100 | 71 | 99 | 99 | 62 |
| B 10 | 58 | 94 | 99 | 66 | 95 | 99 | 74 | 97 | 99 | 94 | 99 | 97 | 98 | 99 | 65 | 98 | 99 | 58 |
| V 3 | 53 | 91 | 99 | 64 | 94 | 99 | 74 | 98 | 99 | 95 | 99 | 97 | 99 | 99 | 66 | 99 | 99 | 53 |
| B 11 | 67 | 98 | 99 | 75 | 98 | 99 | 85 | 99 | 99 | 99 | 99 | 99 | 100 | 100 | 71 | 99 | 99 | 65 |
| B 12 | 69 | 99 | 99 | 78 | 99 | 99 | 87 | 100 | 99 | 99 | 100 | 99 | 100 | 100 | 72 | 99 | 100 | 61 |
| V 4 | 49 | 92 | 99 | 60 | 93 | 99 | 71 | 96 | 99 | 92 | 99 | 98 | 99 | 99 | 63 | 99 | 99 | 49 |
| B 13 | 58 | 98 | 99 | 72 | 98 | 99 | 79 | 99 | 99 | 98 | 100 | 99 | 100 | 100 | 70 | 100 | 100 | 59 |

**Tabelle 8:** Dynamisches Konvertierungsverhalten der frischen Katalysatoren (Synthesegastest

Z Konversion

| Beispiel | $\lambda=0,97$ | | | $\lambda=0,98$ | | | $\lambda=0,99$ | | | $\lambda=1,00$ | | | $\lambda=1,01$ | | | $\lambda=1,02$ | | |
|---|---|---|---|---|---|---|---|---|---|---|---|---|---|---|---|---|---|---|
| | CO | HC | NO | CO | HC | NO | CO | HC | NO | CO | HC | NO | CO | HC | NO | CO | HC | NO |
| V 1 | 27 | 48 | 68 | 43 | 52 | 66 | 60 | 64 | 66 | 71 | 72 | 57 | 77 | 82 | 52 | 82 | 89 | 45 |
| B 1 | 38 | 62 | 73 | 57 | 69 | 73 | 71 | 79 | 74 | 81 | 88 | 64 | 87 | 91 | 59 | 93 | 97 | 51 |
| B 2 | 41 | 62 | 78 | 60 | 64 | 71 | 74 | 76 | 73 | 85 | 85 | 68 | 90 | 88 | 61 | 95 | 95 | 51 |
| B 3 | 36 | 65 | 75 | 54 | 66 | 73 | 73 | 78 | 73 | 83 | 87 | 66 | 89 | 91 | 60 | 95 | 97 | 50 |
| B 4 | 39 | 60 | 75 | 58 | 66 | 72 | 73 | 78 | 73 | 80 | 83 | 67 | 89 | 89 | 59 | 94 | 95 | 51 |
| V 2 | 43 | 86 | 94 | 54 | 91 | 90 | 63 | 94 | 83 | 73 | 95 | 70 | 74 | 96 | 57 | 73 | 96 | 47 |
| B 5 | 54 | 91 | 99 | 66 | 95 | 99 | 75 | 98 | 95 | 89 | 99 | 85 | 91 | 99 | 65 | 90 | 99 | 59 |
| B 6 | 56 | 95 | 99 | 69 | 97 | 99 | 78 | 99 | 93 | 90 | 99 | 89 | 91 | 99 | 68 | 91 | 99 | 59 |
| B 7 | 53 | 93 | 99 | 69 | 97 | 99 | 76 | 99 | 94 | 87 | 99 | 83 | 89 | 99 | 63 | 89 | 99 | 56 |
| B 8 | 48 | 88 | 95 | 56 | 92 | 94 | 64 | 95 | 86 | 76 | 95 | 72 | 76 | 97 | 55 | 75 | 96 | 49 |
| B 9 | 51 | 92 | 99 | 69 | 96 | 99 | 75 | 99 | 93 | 87 | 99 | 83 | 89 | 99 | 64 | 89 | 99 | 58 |
| B 10 | 45 | 83 | 95 | 54 | 90 | 93 | 62 | 92 | 85 | 74 | 94 | 74 | 74 | 95 | 56 | 74 | 96 | 47 |
| V 3 | 39 | 74 | 81 | 51 | 80 | 82 | 62 | 84 | 78 | 75 | 88 | 68 | 77 | 89 | 54 | 79 | 90 | 49 |
| B 11 | 44 | 86 | 94 | 63 | 88 | 94 | 70 | 91 | 91 | 86 | 97 | 75 | 89 | 98 | 59 | 92 | 98 | 55 |
| B 12 | 47 | 89 | 96 | 65 | 91 | 97 | 73 | 95 | 93 | 88 | 98 | 78 | 92 | 98 | 61 | 92 | 98 | 58 |
| V 4 | 41 | 79 | 85 | 53 | 84 | 85 | 63 | 85 | 80 | 77 | 86 | 70 | 79 | 90 | 52 | 80 | 91 | 48 |
| B 13 | 49 | 88 | 93 | 59 | 90 | 95 | 72 | 92 | 92 | 88 | 98 | 80 | 91 | 98 | 60 | 91 | 98 | 56 |

EP 0 441 173 B1

Tabelle 9: Kaltstartverhalten der frischen
Katalysatoren bei fettem Abgas
($\lambda$ = 0,984) (Motortest)

| Beispiel | Anspringtemperatur [$^0$C] für 50 %-Konversion | | |
|---|---|---|---|
| | $CO_{50}$ | $HC_{50}$ | $NO_{50}$ |
| V 5 | 319 | 351 | 313 |
| B 14 | 295 | 333 | 284 |
| V 6 | 310 | 344 | 305 |
| B 15 | 288 | 337 | 278 |
| B 16 | 283 | 321 | 275 |

18

Tabelle 10:    Kaltstartverhalten der gealterten
               Katalysatoren bei fettem Abgas
               ($\lambda$ = 0,984) (Motortest)

| Beispiel | Anspringtemperatur [°C] für 50 %-Konversion | | |
|----------|--------|--------|--------|
|          | $CO_{50}$ | $HC_{50}$ | $NO_{50}$ |
| V 5  | 364 | 376 | 353 |
| B 14 | 335 | 342 | 320 |
| V 6  | 353 | 361 | 338 |
| B 15 | 324 | 337 | 305 |
| B 16 | 319 | 332 | 303 |

Tabelle 11:   Kaltstartverhalten der frischen
              Katalysatoren bei magerem Abgas
              ($\lambda$ = 1,02) (Motortest)

| Beispiel | Anspringtemperatur [$^{\circ}$C] für 50 %-Konversion | |
|---|---|---|
| | $CO_{50}$ | $HC_{50}$ |
| V 5 | 321 | 344 |
| B 14 | 289 | 300 |
| V 6 | 309 | 316 |
| B 15 | 278 | 283 |
| B 16 | 271 | 279 |
| V 7 | 342 | 345 |
| B 17 | 319 | 323 |
| B 18 | 325 | 327 |

Tabelle 12:    Kaltstartverhalten der gealterten
               Katalysatoren bei magerem Abgas
               ($\lambda$ = 1,02) (Motortest)

| Beispiel | Anspringtemperatur [$^{\circ}$C] für 50 %-Konversion | |
|---|---|---|
| | $CO_{50}$ | $HC_{50}$ |
| V 5 | 335 | 359 |
| B 14 | 311 | 317 |
| V 6 | 342 | 349 |
| B 15 | 321 | 329 |
| B 16 | 315 | 324 |
| V 7 | > 450$^{\circ}$ C | > 450$^{\circ}$ C |
| B 17 | > 450$^{\circ}$ C | > 450$^{\circ}$ C |
| B 18 | > 450$^{\circ}$ C | > 450$^{\circ}$ C |

Tabelle 13:    Dynamisches Konvertierungsverhalten
               der frischen Katalysatoren (Motortest)

| Beispiel | % Konversion | | | | | | | | |
|----------|--------------|---|---|---|---|---|---|---|---|
| | $\lambda=0,965$ | | | $\lambda=0,995$ | | | $\lambda=1,008$ | | |
| | CO | HC | $NO_x$ | CO | HC | $NO_x$ | CO | HC | $NO_x$ |
| V 5 | 62 | 36 | 98 | 93 | 81 | 99 | 99 | 92 | 65 |
| B 14 | 69 | 42 | 100 | 98 | 87 | 99 | 100 | 94 | 70 |
| V 6 | 76 | 35 | 99 | 96 | 82 | 99 | 100 | 92 | 64 |
| B 15 | 84 | 40 | 100 | 98 | 86 | 100 | 99 | 95 | 69 |
| B 16 | 82 | 45 | 100 | 98 | 88 | 100 | 100 | 97 | 68 |
| V 7 | 51 | 40 | 93 | 94 | 91 | 94 | 98 | 93 | 63 |
| B 17 | 55 | 44 | 95 | 95 | 94 | 95 | 98 | 94 | 65 |
| B 18 | 54 | 43 | 95 | 95 | 94 | 94 | 98 | 94 | 65 |

EP 0 441 173 B1

Tabelle 14:   Dynamisches Konvertierungsverhalten der
gealterten Katalysatoren (Motortest)

| Beispiel | Z Konversion | | | | | | | | |
|---|---|---|---|---|---|---|---|---|---|
| | $\lambda=0,965$ | | | $\lambda=0,995$ | | | $\lambda=1,008$ | | |
| | CO | HC | $NO_x$ | CO | HC | $NO_x$ | CO | HC | $NO_x$ |
| V 5 | 52 | 58 | 94 | 91 | 90 | 91 | 98 | 91 | 60 |
| B 14 | 59 | 67 | 95 | 99 | 93 | 94 | 100 | 94 | 67 |
| V 6 | 53 | 55 | 93 | 92 | 93 | 90 | 99 | 92 | 59 |
| B 15 | 58 | 63 | 95 | 99 | 96 | 95 | 99 | 95 | 63 |
| B 16 | 57 | 64 | 95 | 99 | 98 | 97 | 99 | 96 | 63 |
| V 7 | 43 | 53 | 72 | 65 | 77 | 59 | 76 | 84 | 51 |
| B 17 | 44 | 55 | 76 | 68 | 80 | 61 | 77 | 84 | 53 |
| B 18 | 46 | 55 | 75 | 68 | 79 | 62 | 77 | 84 | 54 |

**Patentansprüche**

1.  Katalysator für die Reinigung der Abgase von Brennkraftmaschinen mit Aluminiumoxid der Übergangsreihe als Träger, welcher 3-70 Gew.% $CeO_2$ und 1-20 Gew.% $ZrO_2$ als Promotoren enthält und einer auf den Träger aufgebrachten aktiven Phase aus 0,02-3 Gew.% Platin und/oder Palladium und Rhodium, mit einem Gewichtsverhältnis zwischen Platin und/oder Palladium und dem Rhodium von 1:2 bis 15:1, und gegebenenfalls einem Gewichtsverhältnis zwischen Platin und Palladium von 10:1 bis 1:5, wobei man den Träger mit einer Lösung der Promotorverbindungen imprägniert und/oder durch Vermischen desselben mit einer Suspension von Oxiden, Hydroxiden oder Carbonaten der jeweiligen Promotorelemente belegt, nachfolgend an Luft bei 300-900 °C behandelt und dann imprägniert mit einer Lösung A von Verbindungen des Platins und/oder des Palladiums in einer Menge, welche mindestens 30 % der Gesamtmenge von Platin und/oder Palladium entspricht, trocknet und aktiviert, dann imprägniert mit einer Lösung B, welche die Verbindung von Rhodium, gegebenenfalls die Restmenge an Platin und/oder Palladiumverbindungen und ein oder mehrere Verbindungen von mindestens einem Nichtedelmetall aus der Reihe Lithium, Kalium, Rubidium, Magnesium, Calcium, Barium, Lanthan, Cer, Praseodym, Neodym, Samarium, Eisen, Kobalt und Nickel in einer Menge bis zur 5-fachen Masse des Gesamt-Edelmetalls enthält sowie erneut trocknet und aktiviert.

2.  Katalysator nach Anspruch 1, dadurch gekennzeichnet, daß der Träger aus Aluminiumoxid der Übergangsreihe als weitere Promotoren 0-20 Gew.% $La_2O_3$, gegebenenfalls als Mischung mit anderen

23

Seltenerdmetalloxiden, 0-10 Gew.% $Fe_2O_3$ und 0-20 Gew. NiO enthält.

3.  Katalysator nach Anspruch 2, dadurch gekennzeichnet, daß das Gewichtsverhältnis zwischen Platin und/oder Palladium und dem Rhodium 1:1 bis 3:1 beträgt.

4.  Katalysator nach den Ansprüchen 2 oder 3, dadurch gekennzeichnet, daß der Katalysator in Form eines Überzugs auf einem inerten Träger aus Keramik oder Metall in einer Menge von 5-30 Gew.%, bezogen auf das Gewicht des inerten Trägers, vorliegt.

5.  Katalysator nach einem der Ansprüche 2 bis 4, dadurch gekennzeichnet, daß bei Wabenkatalysatoren oder Schüttgut-Schalenkatalysatoren mit inertem Trägerkern 30 - 100 % der Gesamtmasse des die Promotoren enthaltenden Aluminiumoxidträgers vor dem Aufbringen von Lösung A und 0 - 70 % dieser Gesamtmasse vor dem Aufbringen von Lösung B als Überzug abgeschieden wird, wobei bei Teilabscheidung des Trägers die Promotoren in den Teilmassen des Trägers unterschiedliche Konzentrationen aufweisen und vorzugsweise die vor Aufbringen von Lösung B abgeschiedene Teilmasse niedrigere Konzentrationen an den verwendeten Promotoren im Rahmen der vorgesehenen Konzentrationsbereiche aufweist als die Restmasse.

6.  Katalysator nach Anspruch 5, dadurch gekennzeichnet, daß der Promotor $CeO_2$ in die vor Aufbringen von Lösung A vorliegende Trägermasse in Form einer wasserlöslichen Verbindung, und der genannte Promotor in die vor Aufbringen von Lösung B vorliegende Trägermasse durch Vermischen mit einer Suspension von Oxiden, Hydroxiden oder Carbonaten eingebracht ist.

## Claims

1.  A catalyst for the purification of the exhaust gases from internal combustion engines, having aluminium oxide of the transition series as carrier containing from 3 to 70% by weight of $CeO_2$ and from 1 to 20% by weight of $ZrO_2$ as promoters and an active phase of from 0.02 to 3% by weight of platinum and/or palladium and rhodium applied to the carrier, with a ratio by weight of platinum and/or palladium to rhodium of from 1:2 to 15:1, and optionally a ratio by weight of platinum to palladium of from 10:1 to 1:5, in which the carrier is impregnated with a solution of the promoter compounds and/or is lined by mixing the latter with a suspension of oxides, hydroxides or carbonates of the given promoter elements, and the carrier is then treated in air at 300 to 900°C and subsequently impregnated with a solution A of compounds of platinum and/or palladium in a quantity corresponding to at least 30% of the total quantity of palladium and/or platinum and dried and activated, then impregnated with a solution B which contains the compound of rhodium, optionally the remainder of the platinum and/or palladium compounds and one or more compounds of at least one base metal selected from lithium, potassium, rubidium, magnesium, calcium, barium, lanthanum, cerium, praseodymium, neodymium, samarium, iron, cobalt and nickel in a quantity of up to 5 times the mass of the total quantity of noble metal, and the carrier is again dried and activated.

2.  A catalyst according to claim 1, characterised in that the carrier of aluminium oxide of the transition series contains, as additional promoters, from 0 to 20% by weight of $La_2O_3$, optionally as mixture with other rare earth metal oxides, from 0 to 10% by weight of $Fe_2O_3$ and from 0 to 20% by weight of NiO.

3.  A catalyst according to claim 2, charaterised in that the ratio by weight of platinum and/or palladium to rhodium is from 1:1 to 3:1.

4.  A catalyst according to claim 2 or claim 3, charaterised in that the catalyst is in the form of a coating on an inert carrier of ceramic or metal in a quantity of from 5 to 30% by weight, based on the weight of the inert carrier.

5.  A catalyst according to one of the claims 2 to 4, characterised in that in honeycomb catalysts or loose material shell catalysts having an inert carrier core, from 30 to 100% of the total mass of the aluminium oxide carrier containing the promoters is deposited as coating before application of solution A and from 0 to 70% of this total mass is deposited as coating before application of solution B, the promoters being at differing concentrations in the partial masses of carrier if the carrier is deposited in parts and the partial mass deposited before application of solution B preferably containing lower concentrations of the promoters used, within the range of concentrations envisaged, than the remainder of the mass.

**6.** A catalyst according to claim 5, characterised in that the promoter $CeO_2$ is introduced in the form of a water soluble compound into the carrier mass present before application of solution A and the said promoter is introduced into the carrier mass present before application of solution B by mixing it with a suspension of oxides, hydroxides or carbonates.

## Revendications

**1.** Catalyseur pour la purification des gaz d'échappement de moteurs à combustion interne avec de l'oxyde d'aluminium de la série de transition comme support, qui renferme de 3 à 70 % en poids de $CeO_2$, et de 1 à 20 % en poids de $ZrO_2$ comme promoteurs et avec une phase active appliquée sur le support, à base de 0,02-3 % en poids de platine, et/ou de palladium et de rhodium, avec un rapport pondéral entre le platine et/ou le palladium et le rhodium de 1:2 à 15:1, et éventuellement un rapport pondéral entre le platine et le palladium de 10:1 à 1:5, dans lequel le support est imprégné avec une solution des composés du promoteur et/ou est recouvert par le mélange de celui-ci avec une suspension d'oxydes, d'hydroxydes ou de carbonates des éléments du promoteur correspondants, ensuite est traité à l'air à 300-900°C, puis est imprégné avec une solution A de dérivés du platine et/ou du palladium, en quantité qui correspond à 30 % au moins de la quantité totale du platine et/ou du palladium, est séché et activé, puis est imprégné avec une solution B, qui renferme le composé de rhodium, éventuellement la quantité restante de composés de platine et/ou du palladium et un ou plusieurs composés d'au moins un métal ordinaire choisi dans la série formée du lithium, du potassium, du rubidium, du magnésium, du calcium, du baryum, du lanthane, du cérium, du praséodyme, du néodyme, du samarium, du fer, du cobalt, et du nickel en quantité allant jusqu'à 5 fois la masse du métal noble total, ainsi qu'on sèche à nouveau et on active.

**2.** Catalyseur selon la revendication 1, caractérisé en ce que le support en oxyde d'aluminium de la série de transition renferme comme promoteurs supplémentaires de 0 à 20 % en poids de $La_2O_3$, éventuellement sous forme de mélange avec d'autres oxydes de métaux de terres rares, 0 à 10 % en poids de $Fe_2O_3$ et 0 à 20 % en poids de NiO.

**3.** Catalyseur selon la revendication 2, caractérisé en ce que le rapport pondéral entre le platine et/ou le palladium et le rhodium s'élève de 1:1 à 3:1.

**4.** Catalyseur selon les revendications 2 ou 3, caractérisé en ce que le catalyseur se présente sous la forme d'un revêtement sur un support inerte en céramique ou en métal, en quantité de 5 à 30 % en poids, rapporté au poids du support inerte.

**5.** Catalyseur selon l'une des revendications 2 à 4, caractérisé en ce que pour les catalyseurs en nid d'abeilles ou pour les catalyseurs en coquille de produit en vrac avec un noyau de support inerte, 30 à 100 % de la masse totale du support en oxyde d'aluminium contenant les promoteurs avant l'application de la solution A et 0 à 70 % de cette masse totale avant l'application de la solution B sont déposés sous forme de revêtement, tandis que lors du dépôt partiel du support, les promoteurs dans les masses partielles du support possèdent des concentrations différentes et de préférence la masse partielle déposée avant l'application de la solution B possède des concentrations plus basses en promoteurs utilisés, dans le cadre des plages de concentrations prévues, que la masse résiduelle.

**6.** Catalyseur selon la revendication 5, caractérisé en ce que le promoteur $CeO_2$ dans la masse de support présente avant l'application de la solution A, est introduit sous la forme d'un composé hydrosoluble et le promoteur nommé est incorporé dans la masse de support présente avant l'application de la solution B) par mélange avec une suspension d'oxydes, d'hydroxydes ou de carbonates.